# EUROPEAN PATENT SPECIFICATION

(11) **EP 4 432 854 B1**
(45) Date of publication and mention of the grant of the patent: **27.08.2025**
(21) Application number: 22818120.2
(22) Date of filing: 28.11.2022
(51) Int. Cl.: A23L 7/113, F26B 3/08, F26B 15/14, F26B 21/10, F26B 21/12

(54) **A PROCESS AND AN APPARATUS FOR PRODUCING INSTANT NOODLES**
VERFAHREN UND VORRICHTUNG ZUR HERSTELLUNG VON INSTANTNUDELN
PROCÉDÉ ET APPAREIL DE PRODUCTION DE NOUILLES INSTANTANÉES

(30) Priority: 17.01.2022 IT 202200000653
(43) Date of publication of application: 25.09.2024
(73) Proprietor: Pavan S.p.A., 35015 Galliera Veneta (PD) (IT)
(72) Inventor: DI NUNNO, Davide, 35015 Galliera Veneta (Padova) (IT); MOZZATO, Fabio, 35015 Galliera Veneta (Padova) (IT); BARICHELLO, Enrico, 35015 Galliera Veneta (Padova) (IT); SPATZ, Jürgen, 35015 Galliera Veneta (Padova) (IT)
(74) Representative: Dondi, Silvia
(86) International application number: PCT/IB2022/061491
(87) International publication number: WO 2023/135464

(56) References cited:
- EP-A1- 2 356 913
- EP-A1- 2 832 230
- EP-A1- 2 832 231
- JP-A- H10 155 444
- US-A- 4 254 696
- US-A1- 2016 213 034

## Description

### Technical field

The present invention relates to a process and apparatus for producing instant noodles.

Instant noodles (or instant ramen) are noodles arranged in pre-cooked and dried portions or blocks, that are intended to be cooked or soaked in boiling water before eating.

### Background art

It is well-known to prepare instant noodles by flash frying cooked noodles in a continuous process.

For example, document US 4,254,696 describes an apparatus for frying instant noodles. The noodles are divided per a certain quantity (blocks or portions) and transported within the apparatus inside a plurality of cup-shaped receptacles, arranged in rows. The portions of noodles are fried in oil. EP2 356 913 discloses a method for producing instant noodles dried by hot air stream at high temperature. The drying of a formed noodle block is carried out in a retainer.

It is felt the need to produce instant noodles with a lower content of fat.

In addition, the instant noodles obtained by frying tend to get brown and too doughy, thus less appreciated by the consumers.

There are also known methods for producing instant noodles "in batch", but these methods are not suitable for a continuous production in food industry.

### Disclosure of the invention

In this context, the technical task at the basis of the present invention is to propose a process and apparatus for producing instant noodles, which overcome the above-mentioned drawbacks of the prior art.

In particular, the object of the present invention is to propose a process and apparatus for producing instant noodles that have a lower fat content and, in general, are healthier.

Another object of the present invention is to propose a process and apparatus for producing instant noodles that have higher qualities over the prior art, both in terms of texture and appearance.

The stated technical task and specified objects are substantially achieved by a process for producing instant noodles starting from noodles divided in portions or blocks, comprising the steps of:
- transporting the portions of noodles by means of a conveyor along a transport direction, said conveyor comprising a plurality of cup-shaped receptacles for receiving the portions of noodles, each cup-shaped receptacle having a holed bottom;
- subjecting the portions of noodles arranged in the cup-shaped receptacles to an upper air flow having a temperature that is comprised between 100°C and 300°C, the upper air flow being directed from a first zone above the conveyor to a second zone under the conveyor;
- subjecting the portions of noodles arranged in the cup-shaped receptacles to a lower air flow having a temperature that is comprised between 100°C and 300°C, the lower air flow being directed from the second zone to the first zone.

According to one embodiment of the invention, the portions of noodles are first subjected to the upper air flow and then subjected to the lower air flow.

According to another embodiment of the invention, the portions of noodles are first subjected to the lower air flow and then subjected to the upper air flow.

According to one aspect of the invention, the upper air flow and the lower air flow have a speed comprised between 20 m/s and 40 m/s.

According to one aspect of the invention, duration of subjecting the portions of noodles to the upper air flow and the duration of subjecting the portions of noodles to the lower air flow are the same.

According to one embodiment of the invention, the process further comprises subjecting the portions of noodles arranged in the cup-shaped receptacles to further upper air flows alternating to further lower air flows.

The further upper air flows have a temperature comprised between 100°C and 300°C and are directed from the first zone to the second zone, while the further lower air flows have a temperature comprised between 100°C and 300°C and are directed from the second zone to the first zone. According to one embodiment of the invention, the process further comprises a step of moving the portions of noodles arranged in the cup-shaped receptacles by means of an air flow.

In particular, the step of moving occurs before subjecting the portions of noodles to the upper air flow and to the lower air flow.

The stated technical task and specified objects are substantially achieved by an apparatus for producing instant noodles starting from noodles divided in portions or blocks, the apparatus comprising:
- a conveyor configured to transport the portions of noodles along a transport direction, said conveyor comprising a plurality of cup-shaped receptacles for receiving the portions of noodles, each cup-shaped receptacle having a holed bottom;
- a toasting chamber, the conveyor being arranged to partly pass through the toasting chamber;
- a fan generating an air flow for moving the portions of noodles arranged in the cup-shaped reptacles;
- a first air injecting device configured to introduce into a first part of the toasting chamber an upper air flow towards the portions of noodles arranged in the cup-shaped receptacles, the upper air flow having a temperature that is comprised between 100°C and 300°C and being directed from a first zone above the conveyor to a second zone under the conveyor;
- a second air injecting device configured to introduce into a second part of the toasting chamber a lower air flow towards the portions of noodles arranged in the cup-shaped receptacles, the lower air flow having a temperature that is comprised between 100°C and 300°C and being directed from the second zone to the first zone.

According to one aspect of the invention, the first part and the second part of the toasting chamber are in fluid communication and have the same volume.

According to one embodiment of the invention, the first part of the toasting chamber is arranged upstream the second part of the toasting chamber with reference to the transport direction.

According to another embodiment of the invention, the second part of the toasting chamber is arranged upstream the first part of the toasting chamber with reference to the transport direction.

According to one aspect of the invention, each air injecting device comprises:
- at least one fan to direct the corresponding air flow towards the portions of noodles;
- a heating element that is tunable so as to adjust the temperature of the corresponding air flow.

According to one aspect of the invention, the upper air flow and the lower air flow have a speed comprised between 20 m/s and 40 m/s.

According to one aspect ot the invention, each air injecting device comprises a plurality of tubes configured to create concentrate air jets towards the portions of noodles.

According to one aspect of the invention, the apparatus further comprises motorized means for actuating the conveyor with a speed that can be set so that it takes a first predefined time for the portions of noodles to travel across the first part of the toasting chamber and it takes a second predefined time for the portions of noodles to travel across the second part of the toasting chamber.

According to one aspect of the invention, the first predefined time is equal to the second predefined time.

According to one aspect of the invention, the apparatus further comprises a plurality of rods partially arranged above the conveyor so as to maintain the portions of noodles within the cup-shaped receptacles.

According to one aspect of the invention, each part of the toasting chamber further comprises a discharge conduit configured to extract part of the air so as to lower the humidity level within the toasting chamber. The invention is as defined in the appended claims.

### Brief description of drawings

Further characteristics and advantages of the present invention will more fully emerge from the non-limiting description of a preferred but not exclusive embodiment of a process and apparatus for producing instant noodles, as depicted in the attached figures:

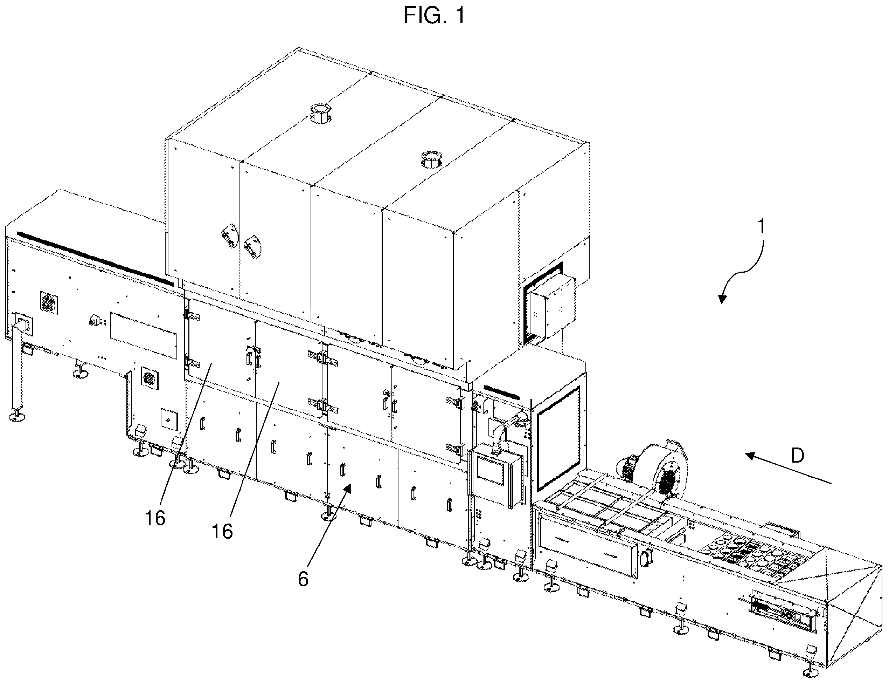

- figure 1 illustrates an apparatus for producing instant noodles starting from noodles divided in portions or blocks, according to the present invention, in a perspective view;

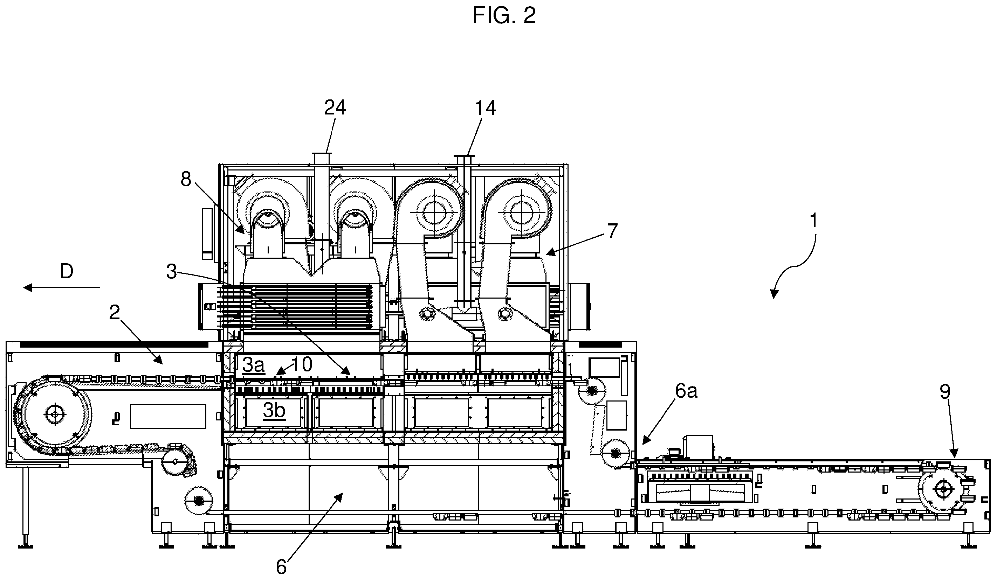

- figure 2 illustrates the apparatus of figure 1, in a lateral cross-section;

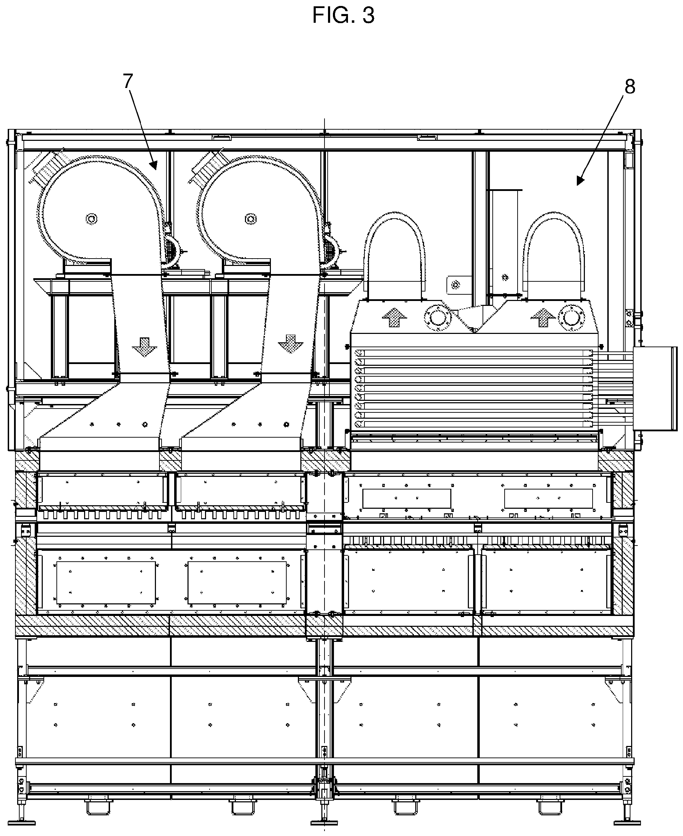

- figure 3 illustrates a part of the apparatus of figure 2;

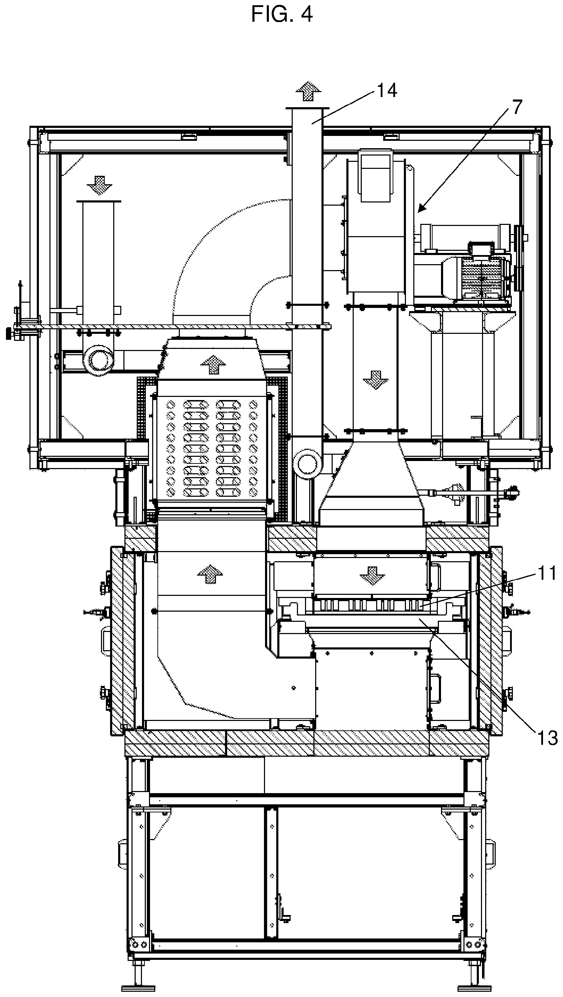

- figure 4 illustrates a part (in particular the first air injecting device) of the apparatus of figure 2, in a frontal cross-section;

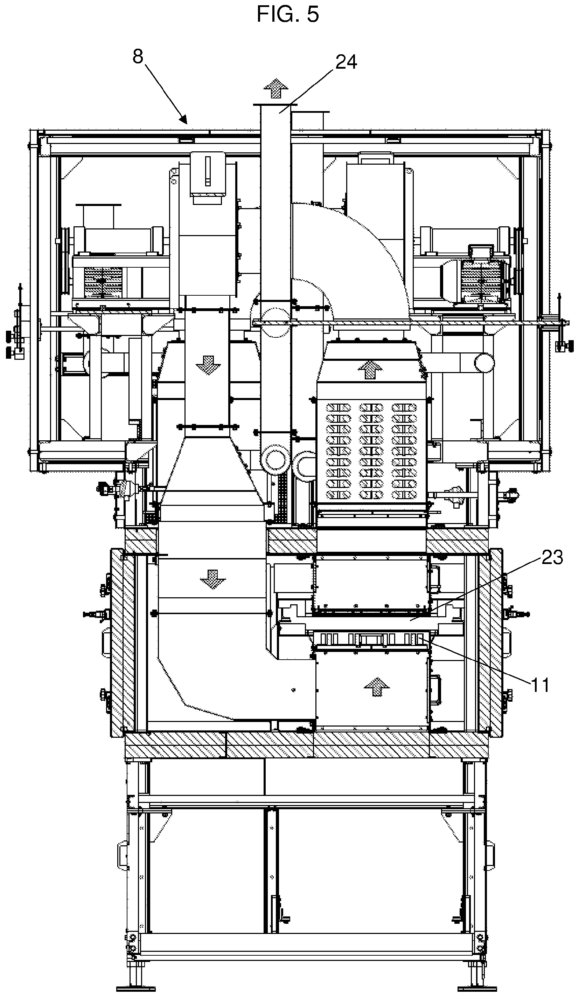

- figure 5 illustrates a part (in particular the second air injecting device) of the apparatus of figure 2, in a frontal cross-section;

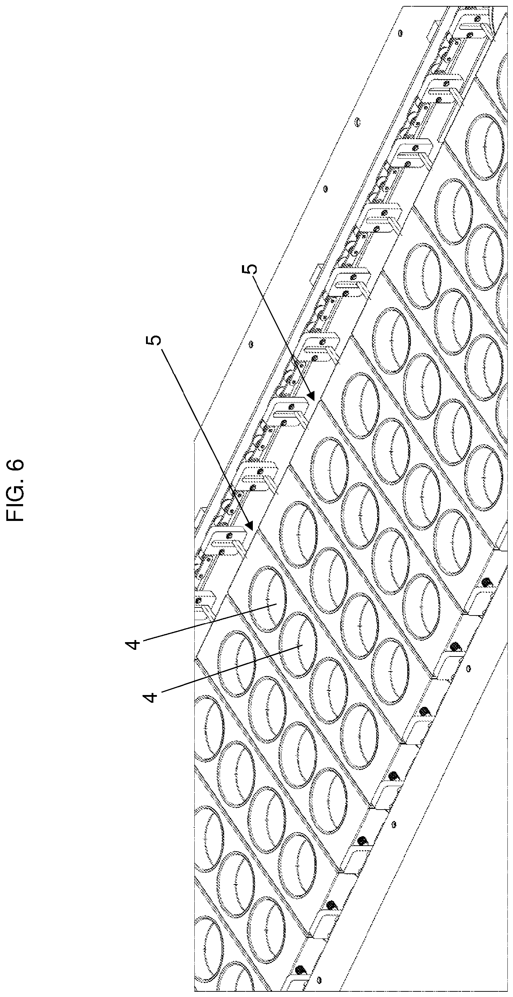

- figure 6 illustrates rows of cup-shaped receptacles of the apparatus of figure 1, in a perspective view;

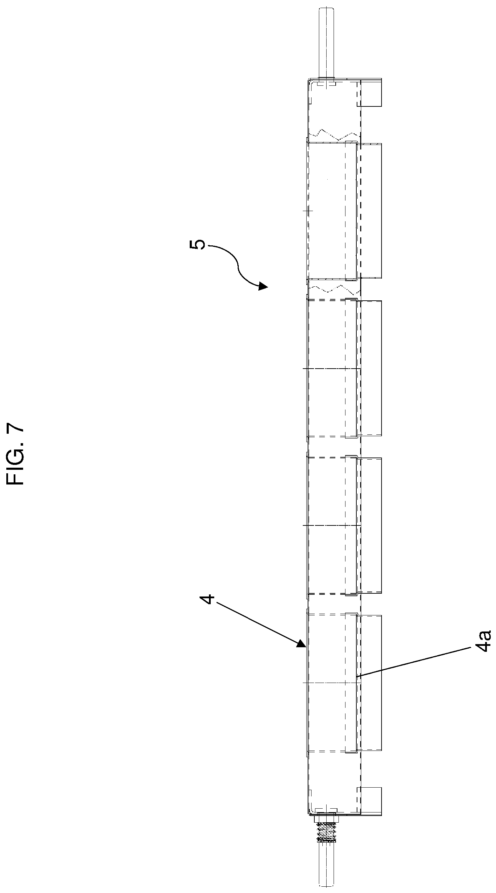

- figure 7 illustrates a row of figure 6 in a lateral cross-section view.

### Detailed description of preferred embodiments of the invention

With reference to the figures, number 1 indicates an apparatus for producing instant noodles starting from noodles divided in portions or blocks. The portions of noodles may be of any shape, i.e. cubic, parallelepiped, spherical, conical, etc.

The apparatus 1 comprises a conveyor 2 configured to transport the portions of noodles in a transport direction D.

According to a preferred embodiment, the conveyor 2 comprises a plurality of cup-shaped receptacles 4 for receiving the portions of noodles. Preferably, the cup-shaped receptacles 4 are arranged in rows 5 that are aligned parallel to each other along directions that are substantially orthogonal to the transport direction D.

According to one aspect, each cup-shaped receptacle 4 has a holed bottom 4a.

For example, the bottom 4a consists of a perforated sheet with a plurality of through-holes. This serves for letting hot air flows passing through them, as it will be explained hereafter.

The apparatus 1 also comprises a toasting chamber 3 for toasting the portions of noodles while advancing along the transport direction D.

In fact, the conveyor 2 is arranged to partly pass through the toasting chamber 3.

In particular, the toasting chamber 3 is delimited by a box-like case 6 having an inlet 6a for the conveyor 2.

The box-like case 6 is composed by a plurality of insulating panels 16. The conveyor 2 divides the toasting chamber 3 in a first zone 3a that is located above the conveyor 2, and a second zone 3b that is located below the conveyor 2.

According to one aspect of the invention, the toasting chamber 3 comprises at least two parts: a first part 13 and a second part 23 that are in fluid communication.

In the embodiment described and illustrated herewith, the first part 13 of the toasting chamber 3 is arranged upstream the second part 23 of the toasting chamber 3 with reference to the transport direction D.

In an alternative embodiment (not illustrated), the second part 23 of the toasting chamber 3 is arranged upstream the first part 13 of the toasting chamber 3 with reference to the transport direction D.

Preferably, the first part 13 and the second part 23 have substantially the same volume.

According to an alternative embodiment, the first part 13 and the second part 23 have a different volume.

According to one aspect of the invention, each part 13, 23 of the toasting chamber 23 further comprises a discharge conduit 14, 24 configured to extract part of the air so as to lower the humidity level within the toasting chamber 3.

Preferably, the apparatus 1 comprises a plurality of spaced rods 10 that are partially arranged above the conveyor 2 so as to maintain the portions of noodles within the cup-shaped receptacles 4.

For example, the rods 10 are arranged above the conveyor 2 in the part of the toasting chamber 3 that is arranged downstream. Considering the illustrated embodiment, the rods 10 are arranged in the second part 23 of the toasting chamber 3.

The apparatus 1 also comprises a first air injecting device 7 configured to introduce into the first part 13 of the toasting chamber 3 an upper air flow and a second air injecting device 8 configured to introduce into the second part 23 of the toasting chamber 3 a lower air flow.

In particular, the upper air flow is directed towards the portions of noodles arranged in the cup-shaped receptacles 4 from the first zone 3a above the conveyor 2 to the second zone 3b under the conveyor 2.

The lower air flow is directed towards the portions of noodles arranged in the cup-shaped receptacles 4 from the second zone 3b to the first zone 3a.

In other words, the upper air flow and the lower air flow have substantially opposite directions. While the upper air flow is directed from top to bottom of the toasting chamber 3 and crossing the conveyor 2, the lower air flow is directed from bottom to top of the toasting chamber 3 and crossing the conveyor 2.

Both the upper air flow and the lower air flow have a temperature that is comprised between 100°C and 300°C.

According to a preferable embodiment, the first air injecting device 7 and the second air injecting device 8 are independent from each other. According to an alternative embodiment, the first air injecting device 7 and the second air injecting device 8 belong to a common system for introducing air into the toasting chamber 3.

Preferably, each air injecting device 7, 8 comprises:
- at least one fan to direct the corresponding air flow towards the portions of noodles;
- a heating element for heating the corresponding air flow.
In particular, the fan may be set to adjust the speed of the corresponding air flow.

Preferably, the speed of the upper and lower air flows is comprised between 20 m/s and 40 m/s.

Also, the heating element is preferably tunable so as to adjust the temperature of the corresponding air flow.

The heating element may be based on different types of technology, i.e. electrical resistances, natural gas, LPG.

According to the illustrated embodiment, each air injecting device 7, 8 comprises a plurality of tubes 11 configured to create concentrate air jets towards the portions of noodles.

The number of tubes 11, their dimensions and position may be configured depending on the needs.

According to one embodiment, the tubes 11 are removably mounted within the injecting devices 7, 8 so that they may be easily cleaned, maintained, and substituted.

In the illustrated embodiment, in the first air injecting device 7 the tubes 11 are located above the conveyor 2 so that the upper air flow is directed towards the portions 11 of noodles from the top to the bottom of the toasting chamber 3.

In the illustrated embodiment, in the second air injecting device 8 the tubes 11 are located under the conveyor 2 so that the lower air flow is directed towards the portions 11 of noodles from the bottom to the top of the toasting chamber 3.

According to a variant, the toasting chamber 3 comprises more than two parts that are in fluid communication, each subjected to an air flow having a temperature comprised between 100°C and 300°C.

Preferably, the air flows have alternating directions, i.e. they cross the conveyor 2 from top to bottom or from bottom to top of the toasting chamber 3.

The apparatus 1 further comprises motorized means 9 for actuating the conveyor 2 with a speed that can be adjusted depending on the needs. Preferably, the speed of the conveyor 2 is adjusted so that:
- the portions of noodles travel across the first part 13 of the toasting chamber 3 in a first predefined time;
- the portions of noodles travel across the second part 23 of the toasting chamber 3 in a second predefined time.

For example, the first predefined time is substantially equal to the second predefined time.

Alternatively, the first predefined time can be longer or shorter than the second predefined time.

A process for producing instant noodles starting from noodles divided in portions or blocks, according to the present invention, is described hereafter.

The portions of noodles are placed in the cup-shaped receptacles 4 of the conveyor 2, that travels along the transport direction D.

Before entering the toasting chamber 3, there is envisaged a step of moving the portions of noodles arranged in the cup-shaped receptacles 4 by means of an air flow.

The air flow for moving the portions of noodles is generated by a fan (not illustrated). The air flow is concentrated toward the portions of noodles by means of tubes that are similar to the tubes 11 of the toasting chamber 3. According to one embodiment, the air flow crosses the conveyor 2 from bottom to top.

For example, the air flow has a temperature comprised between 40°C and 60°C.

The air flow directed from bottom to top prevents the noodles from sticking to the cup-shaped receptacles 4.

In fact, the noodles arriving to the apparatus 1 are initially wet (due to residues of brine) and tend to adhere to the walls of the cup-shaped receptacles 4.

The air flow directed from bottom to top also opposes to the compression of the portions of noodles on the bottoms 4a of the receptacles 4 due to gravity. Then, the portions of noodles enter the toasting chamber 3 from the inlet 6a.

In the embodiment illustrated herewith, the conveyor 2 enters the first part 13 and then the second part 23 of the toasting chamber 3.

In the first part 13, the portions of noodles are subjected to the upper air flow having a temperature that is comprised between 100°C and 300°C. The upper air flow is directed from the first zone 3a above the conveyor 2 to the second zone 3b under the conveyor 2.

In the second part 23, the portions of noodles are subjected to the lower air flow having a temperature that is comprised between 100°C and 300°C.

The lower air flow is directed from the second zone 3b to the first zone 3a, crossing the conveyor 2.

Thus, the illustrated embodiment, the portions of noodles are first subjected to the upper air flow and then subjected to the lower air flow. According to one embodiment, the temperature of the upper and lower air flow may be different.

By setting the speed of the conveyor 2 it is possible to define the times of treatment of the portions of noodles in the first part 13 and in the second part 23.

According to one embodiment, the duration of subjecting the portions of noodles to the upper air flow and the duration of subjecting the portions of noodles to the lower air flow are substantially the same.

According to an alternative embodiment, subjecting the portions of noodles to the upper air flow may last longer or shorter that subjecting the portions of noodles to the lower air flow.

In another embodiment (not illustrated) the conveyor 2 enters the second part 23 and then the first part 13, so the sequence of air flows is exchanged, i.e the portions of noodles are first subjected to the lower air flow and then subjected to the upper air flow.

The process may be carried out in one apparatus 1 according to the one described above.

In another embodiment, the process may be also carried out in a plurality of apparatuses 1 arranged in cascade. In practice, each apparatus 1 acts as a modulus of a larger plant.

The number of apparatuses or modulus is chosen depending on the production rate.

Depending on the specific needs of the process, each apparatus / modulus of the cascade may be set so as to create specific order of alternating air flows with specific duration each.

The characteristics and the advantages of a process and apparatus for producing instant noodles, according to the present invention, are clear, as are the advantages.

In particular, subjecting the portions of noodles to at least two different hot air flows result in a pre-cooking of the noodles that is healthier than frying. The temperatures of hot air flows are set to obtain a toasting of the noodles, that is not a simple drying, but it also changes the chemical and physical properties of the noodles.

In particular, toasting involves a quicker heat exchange that results in noodles that are more porous, less doughy, and not likely to get brown.

In addition, envisaging hot air flows passing through the portions of noodles in two opposite directions (from above the conveyor to below the conveyer and then vice versa) allows a homogeneous toasting of the noodles.

In fact, the portions of noodles arranged in the cup-shaped receptacles are substantially static, so creating two or more hot air flows directed towards them but in opposite directions results in a homogeneous treatment.

The toasting conditions in the two parts of the toasting chamber may also be tuned depending on the needs.

The process and apparatus according to the invention are intended for use in continuous production of instant noodles.

Finally, the proposed invention avoids the use of oil, that raises disposal issues.

## Claims

1. A process for producing instant noodles starting from noodles divided in portions or blocks, comprising the steps of:
- transporting the portions of noodles by means of a conveyor (2) along a transport direction (D), said conveyor (2) comprising a plurality of cup-shaped receptacles (4) for receiving the portions of noodles, each cup-shaped receptacle (4) having a holed bottom (4a);
- subjecting the portions of noodles arranged in the cup-shaped receptacles (4) to an upper air flow having a temperature that is comprised between 100°C and 300°C, the upper air flow being directed from a first zone (3a) above the conveyor (2) to a second zone (3b) under the conveyor (2);
- subjecting the portions of noodles arranged in the cup-shaped receptacles (4) to a lower air flow having a temperature that is comprised between 100°C and 300°C, the lower air flow being directed from the second zone (3b) to the first zone (3a);
- moving the portions of noodles arranged in the cup-shaped receptacles (4) by means of an air flow, the step of moving occurring before subjecting the portions of noodles to the upper air flow and to the lower air flow.

2. The process according to claim 1, wherein the portions of noodles are first subjected to the upper air flow and then subjected to the lower air flow.

3. The process according to claim 1, wherein the portions of noodles are first subjected to the lower air flow and then subjected to the upper air flow.

4. The process according to any one of the claims 1 to 3, wherein the upper air flow and the lower air flow have a speed comprised between 20 m/s and 40 m/s.

5. The process according to any one of the claims 1 to 4, wherein duration of subjecting the portions of noodles to the upper air flow and the duration of subjecting the portions of noodles to the lower air flow are the same.

6. The process according to any one of the claims 1 to 5, further comprising subjecting the portions of noodles arranged in the cup-shaped receptacles (4) to further upper air flows alternating to further lower air flows, the further upper air flows having a temperature comprised between 100°C and 300°C and being directed from the first zone (3a) to the second zone (3b) and the further lower air flows having a temperature comprised between 100°C and 300°C and being directed from the second zone (3b) to the first zone (3a).

7. An apparatus (1) for producing instant noodles starting from noodles divided in portions or blocks using a process according to any one of the preceding claims, the apparatus (1) comprising:
- a conveyor (2) configured to transport the portions of noodles along a transport direction (D), said conveyor (2) comprising a plurality of cup-shaped receptacles (4) for receiving the portions of noodles, each cup-shaped receptacle (4) having a holed bottom (4a);
- a toasting chamber (3), the conveyor (2) being arranged to partly pass through the toasting chamber (3);
- a fan generating an air flow for moving the portions of noodles arranged in the cup-shaped receptacles (4);
- a first air injecting device (7) configured to introduce into a first part (13) of the toasting chamber (3) an upper air flow towards the portions of noodles arranged in the cup-shaped receptacles (4), the upper air flow having a temperature that is comprised between 100°C and 300°C and being directed from a first zone (3a) above the conveyor (2) to a second zone (3b) under the conveyor (2);
- a second air injecting device (8) configured to introduce into a second part (23) of the toasting chamber (3) a lower air flow towards the portions of noodles arranged in the cup-shaped receptacles (4), the lower air flow having a temperature that is comprised between 100°C and 300°C and being directed from the second zone (3b) to the first zone (3a),
wherein the first part (13) of the toasting chamber (3) is arranged upstream the second part (23) of the toasting chamber (3) with reference to the transport direction (D) or the second part (23) of the toasting chamber (3) is arranged upstream the first part (13) of the toasting chamber (3) with reference to the transport direction (D).

8. The apparatus (1) of claim 7, wherein the first part (13) and the second part (23) of the toasting chamber (3) are in fluid communication and have the same volume.

9. The apparatus (1) according to any one of the claims 7 or 8, wherein each air injecting device (7, 8) comprises:
- at least one fan to direct the corresponding air flow towards the portions of noodles,
- a heating element that is tunable so as to adjust the temperature of the corresponding air flow.

10. The apparatus (1) according to any one of the claims 7 to 9, wherein each air injecting device (7, 8) comprises a plurality of tubes (11) configured to create concentrate air jets towards the portions of noodles.

11. The apparatus (1) according to any one of the claims 7 to 10, further comprising motorized means (9) for actuating the conveyor (2) with a speed that can be set so that it takes a first predefined time for the portions of noodles to travel across the first part (13) of the toasting chamber (3) and it takes a second predefined time for the portions of noodles to travel across the second part (23) of the toasting chamber (3).

12. The apparatus (1) according to claim 11, wherein the first predefined time is equal to the second predefined time.

13. The apparatus (1) according to any one of the claims 7 to 12, further comprising a plurality of rods (10) partially arranged above the conveyor (2) so as to maintain the portions of noodles within the cup-shaped receptacles (4).

14. The apparatus (1) according to any one of the claims 7 to 13, wherein each part (13, 23) of the toasting chamber (3) further comprises a discharge conduit (14, 24) configured to extract part of the air so as to lower the humidity level within the toasting chamber (3).

## Patentansprüche

1. Verfahren zur Herstellung von Instantnudeln, ausgehend von in Abschnitte oder Blöcke geteilten Nudeln, umfassend die folgenden Schritte:
- Transportieren der Abschnitte von Nudeln mittels eines Förderers (2) entlang einer Transportrichtung (D), wobei der Förderer (2) eine Vielzahl von becherförmigen Behältnissen (4) umfasst, um die Abschnitte von Nudeln aufzunehmen, wobei ein jedes becherförmiges Behältnis (4) einen gelochten Boden (4a) aufweist;
- Unterziehen der in den becherförmigen Behältnissen (4) angeordneten Abschnitte von Nudeln einem oberen Luftstrom, aufweisend eine Temperatur, die zwischen 100 °C und 300 °C liegt, wobei der obere Luftstrom von einer ersten Zone (3a) über dem Förderer (2) zu einer zweiten Zone (3b) unter dem Förderer (2) gerichtet ist;
- Unterziehen der in den becherförmigen Behältnissen (4) angeordneten Abschnitte von Nudeln einem unteren Luftstrom, aufweisend eine Temperatur, die zwischen 100 °C und 300 °C liegt, wobei der untere Luftstrom von der zweiten Zone (3b) zur ersten Zone (3a) gerichtet ist;
- Bewegen der in den becherförmigen Behältnissen (4) angeordneten Nudeln mittels eines Luftstroms, wobei der Schritt zum Bewegen stattfindet, bevor die Abschnitte von Nudeln dem oberen Luftstrom und dem unteren Luftstrom unterzogen werden.

2. Verfahren nach Anspruch 1, wobei die Abschnitte von Nudeln zuerst dem oberen Luftstrom unterzogen werden und dann dem unteren Luftstrom unterzogen werden.

3. Verfahren nach Anspruch 1, wobei die Abschnitte von Nudeln zuerst dem unteren Luftstrom unterzogen werden und dann dem oberen Luftstrom unterzogen werden.

4. Verfahren nach einem der Ansprüche 1 bis 3, wobei der obere Luftstrom und der untere Luftstrom eine Geschwindigkeit zwischen 20 m/s und 40 m/s aufweisen.

5. Verfahren nach einem der Ansprüche 1 bis 4, wobei die Dauer des Unterziehens der Abschnitte von Nudeln dem oberen Luftstrom und die Dauer des Unterziehens der Abschnitte von Nudeln dem unteren Luftstrom gleich sind.

6. Verfahren nach einem der Ansprüche 1 bis 5, ferner umfassend das Unterziehen der in den becherförmigen Behältnissen (4) angeordneten Abschnitte von Nudeln weiteren oberen Luftströmen, die mit weiteren unteren Luftströmen abgewechselt werden, wobei die weiteren oberen Luftströme eine Temperatur aufweisen, die zwischen 100 °C und 300 °C liegt, und von der ersten Zone (3a) zur zweiten Zone (3b) gerichtet sind, und die weiteren unteren Luftströme eine Temperatur aufweisen, die zwischen 100 °C und 300 °C liegt, und von der zweiten Zone (3b) zur ersten Zone (3a) gerichtet sind.

7. Vorrichtung (1) zur Herstellung von Instantnudeln, ausgehend von in Abschnitte oder Blöcke geteilten Nudeln unter Nutzung eines Verfahrens nach einem der vorhergehenden Ansprüche, wobei die Vorrichtung (1) Folgendes umfasst:
- einen Förderer (2), der ausgelegt ist, um die Abschnitte von Nudeln entlang einer Transportrichtung (D) zu transportieren, wobei der Förderer (2) eine Vielzahl von becherförmigen Behältnissen (4) umfasst, um die Abschnitte von Nudeln aufzunehmen, wobei ein jedes becherförmiges Behältnis (4) einen gelochten Boden (4a) aufweist;
- eine Röstkammer (3), wobei der Förderer (2) angeordnet ist, um teilweise durch die Röstkammer (3) zu führen;
- ein Gebläse, das einen Luftstrom zum Bewegen der in den becherförmigen Behältnissen (4) angeordneten Abschnitte von Nudeln erzeugt;
- ein erstes Lufteinspritzgerät (7), das ausgelegt ist, um in einen ersten Teil (13) der Röstkammer (3) einen oberen Luftstrom hinführend zu den Abschnitten von Nudeln, die in den becherförmigen Behältnissen (4) angeordnet sind, einzuführen, wobei der obere Luftstrom eine Temperatur aufweist, die zwischen 100 °C und 300 °C liegt, und von einer ersten Zone (3a) über dem Förderer (2) zu einer zweiten Zone (3b) unter dem Förderer (2) gerichtet ist;
- ein zweites Lufteinspritzgerät (8), das ausgelegt ist, um in einen zweiten Teil (23) der Röstkammer (3) einen unteren Luftstrom hinführend zu den Abschnitten von Nudeln, die in den becherförmigen Behältnissen (4) angeordnet sind, einzuführen, wobei der untere Luftstrom eine Temperatur aufweist, die zwischen 100 °C und 300 °C liegt, und von der zweiten Zone (3b) zur ersten Zone (3a) gerichtet ist,
wobei der erste Teil (13) der Röstkammer (3) stromaufwärts des zweiten Teils (23) der Röstkammer (3) in Bezug auf die Transportrichtung (D) angeordnet ist oder der zweite Teil (23) der Röstkammer (3) stromaufwärts des ersten Teils (13) der Röstkammer (3) in Bezug auf die Transportrichtung (D) angeordnet ist.

8. Vorrichtung (1) nach Anspruch 7, wobei der erste Teil (13) und der zweite Teil (23) der Röstkammer (3) in Fluidkommunikation sind und das gleiche Volumen aufweisen.

9. Vorrichtung (1) nach einem der Ansprüche 7 oder 8, wobei ein jedes Lufteinspritzgerät (7, 8) Folgendes umfasst:
- mindestens ein Gebläse, um den entsprechenden Luftstrom hinführend zu den Abschnitten von Nudeln zu richten;
- ein Heizelement, das abstimmbar ist, um die Temperatur des entsprechenden Luftstroms zu regeln.

10. Vorrichtung (1) nach einem der Ansprüche 7 bis 9, wobei ein jedes Lufteinspritzgerät (7, 8) eine Vielzahl von Rohren (11) umfasst, die ausgelegt sind, um konzentrierte Luftstrahlen hinführend zu den Abschnitten von Nudeln zu erzeugen.

11. Vorrichtung (1) nach einem der Ansprüche 7 bis 10, ferner umfassend motorisierte Mittel (9) zum Betätigen des Förderers (2) bei einer Geschwindigkeit, die so eingestellt werden kann, dass die Abschnitte von Nudeln einen ersten vordefinierten Zeitraum benötigen, um über den ersten Teil (13) der Röstkammer (3) zu fahren, und die Abschnitte von Nudeln einen zweiten vordefinierten Zeitraum benötigen, um über den zweiten Teil (23) der Röstkammer (3) zu fahren.

12. Vorrichtung (1) nach Anspruch 11, wobei der erste vordefinierte Zeitraum gleich dem zweiten vordefinierten Zeitraum ist.

13. Vorrichtung (1) nach einem der Ansprüche 7 bis 12, ferner umfassend eine Vielzahl von Stäben (10), die teilweise über dem Förderer (2) angeordnet sind, sodass die Abschnitte von Nudeln innerhalb der becherförmigen Behältnisse (4) gehalten werden.

14. Vorrichtung (1) nach einem der Ansprüche 7 bis 13, wobei ein jeder Teil (13, 23) der Röstkammer (3) ferner eine Ablassleitung (14, 24) umfasst, die ausgelegt ist, um einen Teil der Luft abzusaugen, sodass das Feuchtigkeitsniveau innerhalb der Röstkammer (3) gesenkt wird.

## Revendications

1. Procédé de production de nouilles instantanées à partir de nouilles divisées en portions ou en blocs, comprenant les étapes de :
- transporter les portions de nouilles au moyen d'un convoyeur (2) le long d'une direction de transport (D), ledit - convoyeur (2) comprenant une pluralité de réceptacles en forme de coupelle (4) pour recevoir les portions de nouilles, chaque réceptacle en forme de coupelle (4) ayant un fond troué (4a) ;
- soumettre les portions de nouilles agencées dans les réceptacles en forme de coupelle (4) à un flux d'air supérieur ayant une température comprise entre 100°C et 300°C, le flux d'air supérieur étant dirigé d'une première zone (3a) au-dessus du convoyeur (2) vers une seconde zone (3b) sous le convoyeur (2) ;
- soumettre les portions de nouilles agencées dans les récipients en forme de coupelle (4) à un flux d'air inférieur ayant une température comprise entre 100°C et 300°C, le flux d'air inférieur étant dirigé de la seconde zone (3b) vers la première zone (3a) ;
- déplacer les portions de nouilles agencées dans les réceptacles en forme de coupelle (4) au moyen d'un flux d'air, l'étape consistant à déplacer se déroulant avant de soumettre les portions de nouilles au flux d'air supérieur et au flux d'air inférieur.

2. Procédé selon la revendication 1, dans lequel les portions de nouilles sont d'abord soumises au flux d'air supérieur, puis soumises au flux d'air inférieur.

3. Procédé selon la revendication 1, dans lequel les portions de nouilles sont d'abord soumises au flux d'air inférieur, puis soumises au flux d'air supérieur.

4. Procédé selon l'une quelconque des revendications 1 à 3, dans lequel le flux d'air supérieur et le flux d'air inférieur ont une vitesse comprise entre 20 m/s et 40 m/s.

5. Procédé selon l'une quelconque des revendications 1 à 4, dans lequel la durée de soumission des portions de nouilles au flux d'air supérieur et la durée de soumission des portions de nouilles au flux d'air inférieur sont les mêmes.

6. Procédé selon l'une quelconque des revendications 1 à 5, comprenant en outre la soumission des portions de nouilles agencées dans les réceptacles en forme de coupelle (4) à d'autres flux d'air supérieurs alternant avec d'autres flux d'air inférieurs, les autres flux d'air supérieurs ayant une température comprise entre 100°C et 300°C et étant dirigés de la première zone (3a) vers la seconde zone (3b) et les autres flux d'air inférieurs ayant une température comprise entre 100°C et 300°C et étant dirigés de la seconde zone (3b) vers la première zone (3a).

7. Appareil (1) de production de nouilles instantanées à partir de nouilles divisées en portions ou en blocs en utilisant un procédé selon l'une quelconque des revendications précédentes, l'appareil (1) comprenant :
- un convoyeur (2) configuré pour transporter les portions de nouilles le long d'une direction de transport (D), ledit convoyeur (2) comprenant une pluralité de réceptacles en forme de coupelle (4) pour recevoir les portions de nouilles, chaque réceptacle en forme de coupelle (4) ayant un fond troué (4a) ;
- une chambre de grillage (3), le convoyeur (2) étant agencé pour passer partiellement à travers la chambre de grillage (3) ;
- un ventilateur générant un flux d'air pour déplacer les portions de nouilles agencées dans les réceptacles en forme de coupelle (4) ;
- un premier dispositif d'injection d'air (7) configuré pour introduire dans une première partie (13) de la chambre de grillage (3) un flux d'air supérieur vers les portions de nouilles agencées dans les réceptacles en forme de coupe (4), le flux d'air supérieur ayant une température comprise entre 100°C et 300°C et étant dirigé d'une première zone (3a) au-dessus du convoyeur (2) vers une seconde zone (3b) sous le convoyeur (2) ;
- un second dispositif d'injection d'air (8) configuré pour introduire dans une seconde partie (23) de la chambre de grillage (3) un flux d'air inférieur vers les portions de nouilles agencées dans les réceptacles en forme de coupelle (4), le flux d'air inférieur ayant une température comprise entre 100°C et 300°C et étant dirigé de la seconde zone (3b) vers la première zone (3a),
dans lequel la première partie (13) de la chambre de grillage (3) est agencée en amont de la seconde partie (23) de la chambre de grillage (3) par rapport à la direction de transport (D) ou la seconde partie (23) de la chambre de grillage (3) est agencée en amont de la première partie (13) de la chambre de grillage (3) par rapport à la direction de transport (D).

8. Appareil (1) selon la revendication 7, dans lequel la première partie (13) et la seconde partie (23) de la chambre de grillage (3) sont en communication fluidique et ont le même volume.

9. Appareil (1) selon l'une quelconque des revendications 7 ou 8, dans lequel chaque dispositif d'injection d'air (7, 8) comprend :
- au moins un ventilateur pour diriger le flux d'air correspondant vers les portions de nouilles ;
- un élément chauffant réglable afin d'ajuster la température du flux d'air correspondant.

10. Appareil (1) selon l'une quelconque des revendications 7 à 9, dans lequel chaque dispositif d'injection d'air (7, 8) comprend une pluralité de tubes (11) configurés pour créer des jets d'air concentrés vers les portions de nouilles.

11. Appareil (1) selon l'une quelconque des revendications 7 à 10, comprenant en outre des moyens motorisés (9) pour actionner le convoyeur (2) avec une vitesse qui peut être réglée de sorte qu'il faut un premier temps prédéfini pour que les portions de nouilles traversent la première partie (13) de la chambre de grillage (3) et qu'il faut un second temps prédéfini pour que les portions de nouilles traversent la seconde partie (23) de la chambre de grillage (3).

12. Appareil (1) selon la revendication 11, dans lequel le premier temps prédéfini est égal au second temps prédéfini.

13. Appareil (1) selon l'une quelconque des revendications 7 à 12, comprenant en outre une pluralité de tiges (10) partiellement agencées au-dessus du convoyeur (2) de manière à maintenir les portions de nouilles à l'intérieur des réceptacles en forme de coupelle (4).

14. Appareil (1) selon l'une quelconque des revendications 7 à 13, dans lequel chaque partie (13, 23) de la chambre de grillage (3) comprend en outre un conduit de décharge (14, 24) configuré pour extraire une partie de l'air de manière à abaisser le niveau d'humidité à l'intérieur de la chambre de grillage (3).
